# EUROPÄISCHE PATENTSCHRIFT

(11) **EP 1 473 821 B1**
(45) Veröffentlichungstag und Bekanntmachung des Hinweises auf die Patenterteilung: **16.09.2009**
(21) Anmeldenummer: 04002976.1
(22) Anmeldetag: 11.02.2004
(51) Int. Cl.: H02M 5/257, H02M 1/12

(54) **Netzpulsstromrichter**
Voltage source converter
Convertisseur de source de tension

(30) Priorität: 29.04.2003 DE 10319207
(43) Veröffentlichungstag der Anmeldung: 03.11.2004
(73) Patentinhaber: Converteam GmbH, 12277 Berlin (DE)
(72) Erfinder: Janning, Jörg, Dr. Ing., 12059 Berlin (DE)
(74) Vertreter: Dreiss

(56) Entgegenhaltungen:
- DE-A1- 3 213 778
- US-A1- 2001 022 736
- JANNING J ET AL: "HIGHLY DYNAMIC VECTOR CONTROL WITH ADAPTIVE LINE HARMONIC ADJUSTMENT FOR HIGH POWER VOLTAGE SOURCE CONVERTERS HOCHDYNAMISCHE VEKTORREGELUNG MIT ADAPTIVER EINSTELLUNG DER NETZOBERSCHWINGUNGEN FUER HOCHLEISTUNGS-NETZPULSSTROMRICHTER" ELECTRICAL ENGINEERING, SPRINGER, BERLIN,, DE, Bd. 81, Nr. 5, Dezember 1998 (1998-12), Seiten 309-315, XP009034268 ISSN: 0948-7921

## Beschreibung

Die Erfindung betrifft einen Netzpulsstromrichter zur Verwendung in einer Parallelschaltung mehrerer derartiger Netzpulsstromrichter insbesondere für den Energieaustausch zwischen elektrischen Hochspannungsnetzen, mit einem insbesondere auf eine Minimierung von Oberschwingungen ausgerichteten Pulsmuster.

Ein derartiger Netzpulsstromrichter ist aus der Veröffentlichung "Highly dynamic vector control with adaptive line harmonic adjustment for high power voltage source converters" von J. Janning und H.P. Beck, Electrical Engineering 81 (1998), Seiten 309 bis 315 bekannt.

Dort ist in Kapitel 8 anhand der Figur 11 eine Regelung für einen Netzpulsstromrichter beschrieben, bei dem Pulsmuster αi(u,v,w) zur Anwendung kommen, die im Hinblick auf eine Minimierung von Oberschwingungen optimiert sind. Der Index i bezieht sich dabei auf die verschiedenen Schaltwinkel einer Periode, während die Indices u, v, w die drei Stränge bzw. Phasen des Hochspannungsnetzes betreffen. Weiterhin bezieht sich das Pulsmuster αi(u,v,w) nur auf die Aussteuerung einer einzigen Grundschwingung. Für einen gesamten Aussteuerungsbereich existieren somit eine Mehrzahl von unterschiedlichen optimierten Pulsmustern.

In Kapitel 9 ist als Anwendungsbeispiel ein Umrichter für den Energieaustausch zwischen einem dreiphasigen 110 kV, 50 Hz Versorgungsnetz und einem einphasigen 15 kV, 16 2/3 Hz Bahnnetz angegeben.

Zur Erzielung einer höheren Leistung sind häufig eine Mehrzahl derartiger Umrichter parallelgeschaltet. Werden in diesem Fall die einzelnen Umrichter mit optimierten Pulsmustern nach der vorstehenden Veröffentlichung betrieben, so addieren sich die Oberschwingungen der einzelnen Umrichter. Dies kann dadurch vermindert werden, dass die den Umrichtern zugeordneten Transformatoren abwechselnd in Stern- und Dreieckschaltungen verschaltet sind und/oder die Umrichter mit unterschiedlichen Taktungen betrieben werden. Diese Maßnahmen können jedoch nicht oder nur mit sehr hohem Aufwand flexibel an sich ändernde Anzahlen von gleichzeitig eingeschalteten Umrichtern angepasst werden.

Weiterer Stand der Technik ist aus der US 2001/022736 A1 bekannt.

Aufgabe der Erfindung ist es, einen Netzpulsstromrichter zu schaffen, mit dem in einer Parallelschaltung von mehreren derartigen Netzpulsstromrichtern auch dann eine Verminderung der Oberschwingungen erreichbar ist, wenn sich die Anzahl der gleichzeitig eingeschalteten Netzpulsstromrichter verändert.

Bei einem Netzpulsstromrichter der eingangs genannten Art wird diese Aufgabe erfindungsgemäß dadurch gelöst, dass ein Pulsmustergenerator vorgesehen ist, der das Pulsmuster in Abhängigkeit von einer Anzahl der gleichzeitig eingeschalteten Netzpulsstromrichter und von einem Index des jeweils betroffenen Netzpulsstromrichters zur Verfügung stellt.

Auf diese Weise kann jeder der parallelgeschalteten Netzpulsstromrichter flexibel mit demjenigen Pulsmuster betrieben werden, das nicht nur für ihn eine Verminderung von Oberschwingungen mit sich bringt, sondern auch im Hinblick auf die anderen Netzpulsstromrichter von Vorteil ist. Das jeweilige Pulsmuster richtet sich dabei nach der Anzahl der momentan eingeschalteten Netzpulsstromrichter sowie nach dem Index des jeweils betroffenen Netzpulsstromrichters. Damit ist es möglich, in der Parallelschaltung der Netzpulsstromrichter in flexibler Weise auch dann eine Verminderung der Oberschwingungen zu erreichen, wenn sich die Anzahl der gleichzeitig eingeschalteten Netzpulsstromrichter verändert. Die Oberschwingungen können damit jederzeit auf ein Minimum vermindert werden.

Bei einer vorteilhaften Ausgestaltung der Erfindung sind die parallelgeschalteten Netzpulsstromrichter über eine Kommunikationseinrichtung miteinander gekoppelt. Damit ist es möglich, dass die einzelnen Netzpulsstromrichter die Anzahl und/oder den Index selbst abfragen oder dass die Anzahl und/oder der Index von der Kommunikationseinrichtung ermittelt und an die Netzpulsstromrichter weitergegeben wird.

Bei einer weiteren vorteilhaften Ausgestaltung der Erfindung stellt der Pulsmustergenerator für jede Kombinationsmöglichkeit der Anzahl und des Index das zugehörige Pulsmuster zur Verfügung. Besonders zweckmäßig ist es dabei, wenn die möglichen Pulsmuster in dem Pulsmustergenerator abgespeichert sind. Auf diese Weise ist es möglich, mit geringem Aufwand eine schnelle Ermittlung der jeweils aktuellen Pulsmuster zu gewährleisten.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt ein schematisches Blockschaltbild eines Ausführungsbeispiels einer Parallelschaltung von mehreren erfindungsgemäßen Netzpulsstromrichtern, und
- Figur 2: zeigt eine schematische Darstellung eines erfindungsgemäßen Pulsmustergenerators für den Betrieb der einzelnen Netzpulsstromrichter der Figur 1.

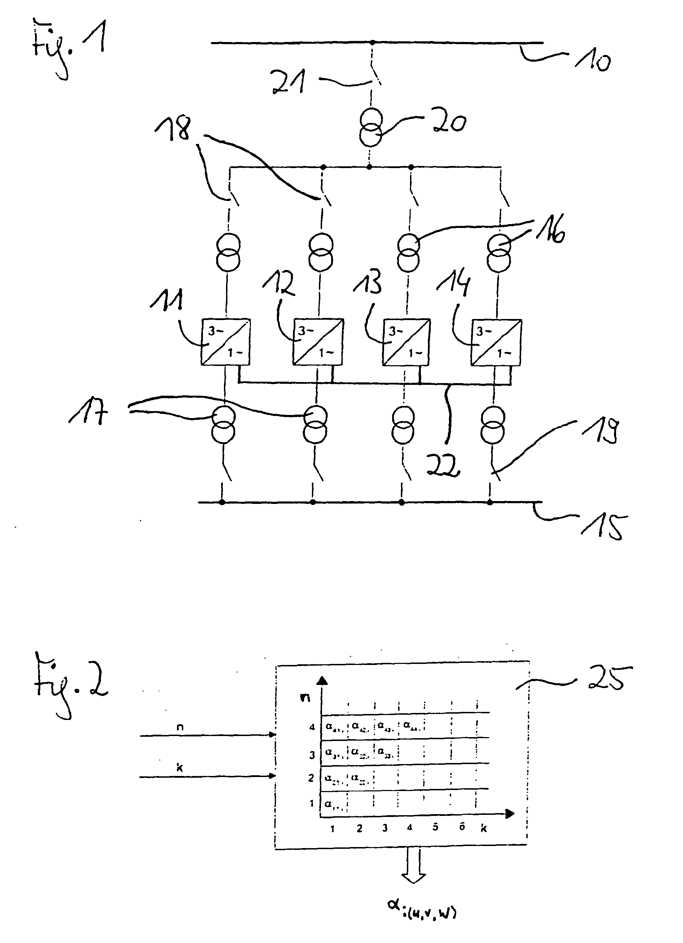

In der Figur 1 ist ein dreiphasiges 110 kV, 50 Hz Versorgungsnetz 10 dargestellt, das über vier parallelgeschaltete Netzpulsstromrichter 11, 12, 13, 14 mit einem einphasigen 110 kV, 16 2/3 Hz Bahnnetz 15 gekoppelt ist. Jeder der Netzpulsstromrichter 11, 12, 13, 14 ist mit in Serie geschalteten Transformatoren 16, 17 und Schaltern 18, 19 verbunden. Alle vier parallelgeschalteten Netzpulsstromrichter 11, 12, 13, 14 sind gemeinsam in Serie zu einem weiteren Transformator 20 und einem weiteren Schalter 21 geschaltet. Zwischen dem Transformator 20 und den Schaltern 18 ist beispielhaft eine Zwischenspannung von 20,5 kV, 50 Hz vorhanden.

Die Netzpulsstromrichter 11, 12, 13, 14 sind über eine Kommunikationseinrichtung 22 miteinander gekoppelt, so dass ein Datenaustausch zwischen den Netzpulsstromrichtern 11, 12, 13, 14 stattfinden kann.

Es versteht sich, dass die Anzahl der parallelgeschalteten Netzpulsstromrichter 11, 12, 13, 14 auch größer oder kleiner sein kann. Ebenfalls ist es möglich, dass insbesondere zur Leistungssteigerung mehrere der in Figur 1 zwischen dem Versorgungsnetz 10 und dem Bahnnetz 15 gezeigten Anordnungen zueinander parallel geschaltet sind.

In jedem der Netzpulsstromrichter 11, 12, 13, 14 der Figur 1 ist eine Regelung enthalten, wie sie beispielsweise in der eingangs erläuterten Veröffentlichung dargestellt und beschrieben ist. Wie eingangs erläutert wurde, kommen bei dieser Regelung Pulsmuster αi(u,v,w) für die drei Phasen zur Anwendung, die im Hinblick auf eine Minimierung von Oberschwingungen optimiert sind. Diese Pulsmuster werden wie folgt ermittelt:

In der Figur 2 ist ein Pulsmustergenerator 25 dargestellt, dem als Eingangssignale eine Anzahl n der gleichzeitig eingeschalteten Netzpulsstromrichter sowie ein Index k des jeweils betroffenen Netzpulsstromrichters zugeführt sind. Als Ausgangssignal erzeugt der Pulsmustergenerator 25 die Pulsmuster αi(u,v,w), die dann von der vorstehend erwähnten Regelung weiterverwendet.werden.

Die Anzahl n der gleichzeitig eingeschalteten Netzpulsstromrichter ist für jeden der Netzpulsstromrichter 11, 12, 13, 14 mit Hilfe der Kommunikationseinrichtung 22 ermittelbar.

Hierzu kann die Kommunikationseinrichtung 22 derart ausgebildet sein, dass sie in vorgegebenen zeitlichen Abständen jeden der Netzpulsstromrichter 11, 12, 13, 14 im Hinblick auf seinen Einschaltzustand abfragt, um dann allen Netzpulsstromrichtern 11, 12, 13, 14 die Anzahl n der gleichzeitig eingeschalteten Netzpulsstromrichter mitzuteilen. Ebenfalls ist es möglich, dass jeder der Netzpulsstromrichter 11, 12, 13, 14 die anderen Netzpulsstromrichter im Hinblick auf deren Einschaltzustand abfragt und daraus selbst die Anzahl n der gleichzeitig eingeschalteten Netzpulsstromrichter ermittelt.

In dem Ausführungsbeispiel der Figur 1 kann die Anzahl n der gleichzeitig eingeschalteten Netzpulsstromrichter maximal 4 sein.

Der Index k des jeweiligen Netzpulsstromrichters ist für jeden der Netzpulsstromrichter 11, 12, 13, 14 mit Hilfe die Kommunikationseinrichtung 22 ermittelbar.

Hierzu kann jeder der Netzpulsstromrichter 11, 12, 13, 14 derart ausgebildet sein, dass er aufgrund der vorstehend erläuterten Abfrage der Einschaltzustände der anderen Netzpulsstromrichter selbst ermittelt, welchen Index k er selbst momentan besitzt. Ebenfalls kann jeder der Netzpulsstromrichter 11, 12, 13, 14 den Index k mit Hilfe weiterer Abfragen oder mit Hilfe von Abfragen der Kommunikationseinrichtung 22 ermitteln.

Beispielhaft wird davon ausgegangen, dass der Index k ausgehend von dem (in der Figur 1 links dargestellten) Netzpulsstromrichter 11 in Richtung zu dem (in der Figur 1 rechts dargestellten) Netzpulsstromrichter 14 ansteigt. Jeder der Netzpulsstromrichter 11, 12, 13, 14 besitzt dann immer denjenigen Index k, der der Folgenummer entspricht, die der jeweilige Netzpulsstromrichter in der Reihenfolge der eingeschalteten Netzpulsstromrichter einnimmt. Der höchste Index k entspricht damit immer der Anzahl n.

Wären beispielsweise alle vier Netzpulsstromrichter 11, 12, 13, 14 eingeschaltet, so hätte der Netzpulsstromrichter 11 den Index k=1, der Netzpulsstromrichter 12 den Index k=2, der Netzpulsstromrichter 13 den Index k=3 und der Netzpulsstromrichter 14 den Index k=4. Die Anzahl n wäre in diesem Fall n=4. Wäre jedoch beispielsweise der Netzpulsstromrichter 12 nicht eingeschaltet, so hätte der Netzpulsstromrichter 11 den Index k= 1, der Netzpulsstromrichter 13 den Index k=2 und der Netzpulsstromrichter 14 den Index k=3. Die Anzahl n wäre in diesem Fall n=3. Wären beispielsweise nur die Netzpulsstromrichter 12, 14 eingeschaltet, so hätte der Netzpulsstromrichter 12 den Index k=1 und der Netzpulsstromrichter 14 den Index k=2. Die Anzahl n wäre in diesem Fall n=2. Wäre nur der Netzpulsstromrichter 13 eingeschaltet, so hätte dieser den Index k=1. Die Anzahl n wäre in diesem Fall n=1.

Würde umgekehrt der Netzpulsstromrichter 12 ermitteln, dass n=3 und k=2 ist, so würde dies bedeuten, dass drei der vier Netzpulsstromrichter 11, 12, 13, 14 eingeschaltet sind, und dass der Netzpulsstromrichter 12 bei den eingeschalteten Netzpulsstromrichtern an zweiter Stelle steht. Letzteres würde gleichzeitig bedeuten, dass auch der Netzpulsstromrichter 11 eingeschaltet sein muss.

Von dem Pulsmustergenerator 25 kann für jede Kombinationsmöglichkeit der Anzahl n und des Index k das zugehörige Pulsmuster αi(u,v,w) für die drei Phasen zur Verfügung gestellt werden. Zu diesem Zweck kann für jede mögliche Kombination das zugehörige Pulsmuster vorab ermittelt worden und in dem Pulsmustergenerator 25 abgespeichert sein. Ebenfalls ist es möglich, dass der Pulsmustergenerator 25 zu jeder Kombinationsmöglichkeit das zugehörige Pulsmuster in Echtzeit ermittelt.

In der Figur 2 ist dies dadurch dargestellt, dass für alle Kombinationen der Anzahl n zwischen n = 1...4 und des Index k zwischen k = 1...4 jeweils ein Satz eines zugehörigen Pulsmusters αi(u,v,w) vorhanden ist. Die einzelnen Sätze der Pulsmuster sind immer zuerst mit einer Indizierung für die Anzahl n und dann mit einer Indizierung für den Index k gekennzeichnet. Die drei Phasen sind bei den einzelnen Sätzen der Pulsmuster der Figur 2 aus Platzgründen nicht angegeben.

Ist beispielsweise für den Netzpulsstromrichter 12 die Anzahl n=3 und der Index k=2, so stellt der Pulsmustergenerator 25 das Pulsmuster α32,i zur Verfügung.

Dieses Pulsmuster wird dann von der Regelung des Netzpulsstromrichters 12 verwendet. In diesem Fall würde gleichzeitig für den Netzpulsstromrichter 11 dieselbe Anzahl n=3, aber der Indes k=1 gelten. Der Netzpulsstromrichter 11 würde damit das Pulsmuster α31,i von dem Pulsmustergenerator 25 zur Verfügung gestellt bekommen und verwenden. Das weitere, zu diesem Beispielfall gehörige Pulsmuster α33,i würde entweder für den Netzpulsstromrichter 13 oder den Netzpulsstromrichter 14 gelten, und zwar in Abhängigkeit davon, welcher der beiden letztgenannten Netzpulsstromrichter 13, 14 momentan eingeschaltet ist.

Der Pulsmustergenerator 25 kann gegebenenfalls nur einmalig vorhanden sein. In diesem Fall würden die in Abhängigkeit von der Anzahl n und dem Index k ausgewählten Pulsmuster über die Kommunikationseinrichtung 22 beispielsweise auf Anfrage an die jeweiligen Netzpulsstromrichter 11, 12, 13, 14 übergeben werden. Ebenfalls ist es möglich, dass jeder der Netzpulsstromrichter 11, 12, 13, 14 mit jeweils einem eigenen Pulsmustergenerator 25 versehen ist. In diesem Fall kann jeder der Netzpulsstromrichter 11, 12, 13, 14 gleichzeitig und unabhängig von den anderen Netzpulsstromrichtern die für ihn geltenden Pulsmuster ermitteln.

Die in dem Pulsmustergenerator 25 abgespeicherten bzw. in Echtzeit ermittelten Pulsmuster werden für jede der beschriebenen Kombinationsmöglichkeiten vorab bzw. aktuell berechnet. Bei diesen Berechnungen wird nicht nur der einzelne Netzpulsstromrichter im Hinblick auf verminderte Oberschwingungen ausgelegt, sondern es wird auch das Zusammenwirken der vier Netzpulsstromrichter 11, 12, 13, 14 in dieser Hinsicht berücksichtigt.

Dabei ist es möglich, dass sich die Oberschwingungen des einzelnen Netzpulsstromrichters erhöhen. Für die Berechnung der Pulsmuster ist es jedoch wesentlich, dass sich die Oberschwingungen der verschiedenen Netzpulsstromrichter nicht aufaddieren, und dass die Oberschwingungen der einzelnen Netzpulsstromrichter sich nicht übermäßig erhöhen.

Die Ermittlung der Pulsmuster kann auf verschiedene Weisen durchgeführt werden. Eine Möglichkeit besteht darin, die Pulsmuster entsprechend den Erläuterungen der eingangs genannten Veröffentlichung unter Berücksichtung der vorstehenden Bedingungen zu berechnen.

Im Betrieb arbeitet jeder der eingeschalteten Netzpulsstromrichter 11, 12, 13, 14 entsprechend der jeweils aktuell ermittelten Pulsmuster. Geht einer der Netzpulsstromrichter 11, 12, 13, 14 von einem eingeschalteten in einen ausgeschalteten Zustand oder umgekehrt über, so wird dies über die Kommunikationseinrichtung 22 den anderen Netzpulsstromrichtern mitgeteilt. Die nunmehr aktuell eingeschalteten Netzpulsstromrichter können daraufhin neue aktuelle Pulsmuster ermitteln und ab diesem Zeitpunkt verwenden. Der ausgeschaltete Netzpulsstromrichter ermittelt kein aktuelles Pulsmuster mehr.

Damit ist es möglich, in der Parallelschaltung der vier Netzpulsstromrichter 11, 12, 13, 14 auch dann eine Verminderung der Oberschwingungen zu erreichen, wenn sich die Anzahl der gleichzeitig eingeschalteten Netzpulsstromrichter verändert. Die Oberschwingungen können damit jederzeit auf ein Minimum vermindert werden.

## Patentansprüche

1. Netzpulsstromrichter (11) zur Verwendung in einer Parallelschaltung mehrerer derartiger Netzpulsstromrichter (11, 12, 13, 14) insbesondere für den Energieaustausch zwischen elektrischen Hochspannungsnetzen, mit einem insbesondere auf eine Minimierung von Oberschwingungen ausgerichteten Pulsmuster, **dadurch gekennzeichnet, dass** ein Pulsmustergenerator (25) vorgesehen ist, der das Pulsmuster (αi(u,v,w)) in Abhängigkeit von einer Anzahl (n) der gleichzeitig eingeschalteten Netzpulsstromrichter (11, 12, 13, 14) und von einem Index (k) des jeweils betroffenen Netzpulsstromrichters (11) zur Verfügung stellt.

2. Netzpulsstromrichter (11) nach Anspruch 1, **dadurch gekennzeichnet, dass** die parallelgeschalteten Netzpulsstromrichter (11, 12, 13, 14) über eine Kommunikationseinrichtung (22) miteinander gekoppelt sind, und dass der Netzpulsstromrichter (11) die Anzahl (n) der gleichzeitig eingeschalteten Netzpulsstromrichter (11, 12, 13, 14) abfragt.

3. Netzpulsstromrichter (11) nach Anspruch 2, **dadurch gekennzeichnet, dass** der Netzpulsstromrichter (11) den Index (k) des jeweils betroffenen Netzpulsstromrichters (11) aus der Abfrage ermittelt.

4. Netzpulsstromrichter (11) nach Anspruch 1, **dadurch gekennzeichnet, dass** die parallelgeschalteten Netzpulsstromrichter (11, 12, 13, 14) über eine Kommunikationseinrichtung (22) miteinander gekoppelt sind, und dass die Kommunikationseinrichtung (22) die Anzahl (n) der gleichzeitig eingeschalteten Netzpulsstromrichter (11, 12, 13, 14) ermittelt.

5. Netzpulsstromrichter (11) nach Anspruch 4, **dadurch gekennzeichnet, dass** die Kommunikationseinrichtung (22) den Index (k) des jeweils betroffenen Netzpulsstromrichters (11) ermittelt.

6. Netzpulsstromrichter (11) nach einem der vorstehenden Ansprüche, **dadurch gekennzeichnet, dass** der Pulsmustergenerator (25) für jede Kombinationsmöglichkeit der Anzahl (n) und des Index (k) das zugehörige Pulsmuster (αi(u,v,w)) zur Verfügung stellt.

7. Netzpulsstromrichter (11) nach Anspruch 6, **dadurch gekennzeichnet, dass** die möglichen Pulsmuster (αi(u,v,w)) in dem Pulsmustergenerator (25) abgespeichert sind.

8. Parallelschaltung von mehreren Netzpulsstromrichtern (11, 12, 13, 14), wobei jeder der Netzpulsstromrichter (11, 12, 13, 14) nach einem der Ansprüche 1 bis 7 ausgebildet ist.

9. Verfahren zum Betreiben eines Netzpulsstromrichters (11), wobei der Netzpulsstromrichter (11) zur Verwendung in einer Parallelschaltung mehrerer derartiger Netzpulsstromrichter (11, 12, 13, 14) insbesondere für den Energieaustausch zwischen elektrischen Hochspannungsnetzen vorgesehen ist, und wobei das Verfahren ein insbesondere auf eine Minimierung von Oberschwingungen ausgerichtetes Pulsmuster ermittelt, **dadurch gekennzeichnet, dass** das Pulsmuster (αi(u,v,w)) in Abhängigkeit von einer Anzahl (n) der gleichzeitig eingeschalteten Netzpulsstromrichter (11, 12, 13, 14) und von einem Index (k) des jeweils betroffenen Netzpulsstromrichters (11) zur Verfügung gestellt wird.

10. Verfahren nach Anspruch 9, **dadurch gekennzeichnet, dass** die möglichen Pulsmuster (αi(u,v,w)) vorab unter Berücksichtigung des Zusammenwirkens der parallelgeschalteten Netzpulsstromrichter (11, 12, 13, 14) und im Hinblick auf verminderte Oberschwingungen ermittelt werden.

## Claims

1. Voltage source convertor (11) for use in a parallel circuit comprising a plurality of such voltage source convertors (11, 12, 13, 14), in particular for energy exchange between electrical high-voltage networks, comprising a pulse pattern intended in particular for minimizing harmonics, **characterized in that** a pulse pattern generator (25) is provided which makes available the pulse pattern (αi(u,v,w)) as a function of a number (n) of simultaneously switched on voltage source convertors (11, 12, 13, 14) and of an index (k) of the voltage source convertor (11) affected in each case.

2. Voltage source convertor (11) according to Claim 1, **characterized in that** the voltage source convertors (11, 12, 13, 14) connected in parallel are coupled to one another via a communication device (22), and **in that** the voltage source convertor (11) polls the number (n) of simultaneously switched-on voltage source convertors (11, 12, 13, 14).

3. Voltage source convertor (11) according to Claim 2, **characterized in that** the voltage source convertor (11) determines the index (k) of the voltage source convertor (11) affected in each case from the polling.

4. Voltage source convertor (11) according to Claim 1, **characterized in that** the voltage source convertors (11, 12, 13, 14) connected in parallel are coupled to one another via a communication device (22), and **in that** the communication device (22) determines the number (n) of simultaneously switched-on voltage source convertors (11, 12, 13, 14).

5. Voltage source convertor (11) according to Claim 4, **characterized in that** the communication device (22) determines the index (k) of the voltage source convertor (11) affected in each case.

6. Voltage source convertor (11) according to any of the preceding claims, **characterized in that** the pulse pattern generator (25) makes available the associated pulse pattern (αi(u,v,w)) for each possible combination of the number (n) and of the index (k).

7. Voltage source convertor (11) according to Claim 6, **characterized in that** the possible pulse patterns (αi(u,v,w)) are stored in the pulse pattern generator (25).

8. Parallel circuit comprising a plurality of voltage source convertors (11, 12, 13, 14), each of the voltage source convertors (11, 12, 13, 14) being formed according to any of Claims 1 to 7.

9. Method for operating a voltage source convertor (11), the voltage source convertor (11) being intended for use in a parallel circuit comprising a plurality of such voltage source convertors (11, 12, 13, 14), in particular for energy exchange between electrical high-voltage networks, and the method determining a pulse pattern intended in particular for minimizing harmonics, **characterized in that** the pulse pattern (αi(u,v,w)) is made available as a function of a number (n) of simultaneously switched-on voltage source convertors (11, 12, 13, 14) and of an index (k) of the voltage source convertor (11) affected in each case.

10. Method according to Claim 9, **characterized in that** the possible pulse patterns (αi(u,v,w)) are determined beforehand taking into account the cooperation of the voltage source convertors (11, 12, 13, 14) connected in parallel and with regard to reduced harmonics.

## Revendications

1. Convertisseur de source de tension (11) destiné à être utilisé dans un montage en parallèle de plusieurs convertisseurs de source de tension (11, 12, 13, 14) de ce type, en particulier pour l'échange d'énergie entre des réseaux électriques à haute tension, avec un modèle impulsionnel visant notamment à minimiser les harmoniques, **caractérisé en ce qu'**il est prévu un générateur de modèle impulsionnel (25) qui fournit le modèle impulsionnel (αᵢ(u,v,w)) en fonction du nombre (n) des convertisseurs de source de tension (11, 12, 13, 14) activés simultanément et de l'indice (k) du convertisseur de source de tension (11) respectivement concerné.

2. Convertisseur de source de tension (11) selon la revendication 1, **caractérisé en ce que** les convertisseurs de source de tension (11, 12, 13, 14) montés en parallèle sont couplés les uns aux autres par le biais d'un dispositif de communication (22) et **en ce que** le convertisseur de source de tension (11) scrute le nombre (n) des convertisseurs de source de tension (11, 12, 13, 14) activés simultanément.

3. Convertisseur de source de tension (11) selon la revendication 2, **caractérisé en ce que** le convertisseur de source de tension (11) détermine l'indice (k) du convertisseur de source de tension (11) respectivement concerné à partir de la scrutation.

4. Convertisseur de source de tension (11) selon la revendication 1, **caractérisé en ce que** les convertisseurs de source de tension (11, 12, 13, 14) montés en parallèle sont couplés les uns aux autres par le biais d'un dispositif de communication (22) et **en ce que** le dispositif de communication (22) détermine le nombre (n) des convertisseurs de source de tension (11, 12, 13, 14) activés simultanément.

5. Convertisseur de source de tension (11) selon la revendication 4, **caractérisé en ce que** le dispositif de communication (22) détermine l'indice (k) du convertisseur de source de tension (11) respectivement concerné.

6. Convertisseur de source de tension (11) selon l'une des revendications précédentes, **caractérisé en ce que** le générateur de modèle impulsionnel (25) fournit pour chaque combinaison possible du nombre (n) et de l'indice (k) le modèle impulsionnel (αᵢ(u,v,w)) correspondant.

7. Convertisseur de source de tension (11) selon la revendication 6, **caractérisé en ce que** les modèles impulsionnels (αᵢ(u, v, w)) possibles sont stockés dans le générateur de modèle impulsionnel (25).

8. Montage en parallèle de plusieurs convertisseurs de source de tension (11, 12, 13, 14), chacun desdits convertisseurs de source de tension (11, 12, 13, 14) étant réalisé selon l'une des revendications 1 à 7.

9. Procédé d'exploitation d'un convertisseur de source de tension (11), dans lequel le convertisseur de source de tension (11) est prévu pour être utilisé dans un montage en parallèle de plusieurs convertisseurs de source de tension (11, 12, 13, 14) de ce type, en particulier pour l'échange d'énergie entre des réseaux électriques à haute tension, et dans lequel le procédé détermine un modèle impulsionnel visant notamment à minimiser les harmoniques, **caractérisé en ce que** le modèle impulsionnel (αᵢ(u,v,w)) est fourni en fonction du nombre (n) des convertisseurs de source de tension (11, 12, 13, 14) activés simultanément et de l'indice (k) du convertisseur de source de tension (11) respectivement concerné.

10. Procédé selon la revendication 9, **caractérisé en ce que** les modèles impulsionnels (αᵢ(u,v,w)) possibles sont déterminés au préalable en tenant compte de l'action conjointe des convertisseurs de source de tension (11, 12, 13, 14) montés en parallèle et dans le but de minimiser les harmoniques.
